# EUROPEAN PATENT SPECIFICATION

(11) **EP 1 689 603 B1**
(45) Date of publication and mention of the grant of the patent: **15.04.2009**
(21) Application number: 04798519.7
(22) Date of filing: 17.11.2004
(51) Int. Cl.: B60H 3/02, B05B 7/12

(54) **A MIST-SPRAYING APPARATUS**
NEBELSPRÜHVORRICHTUNG
APPAREIL DE PULVERISATION DE BROUILLARD

(30) Priority: 03.12.2003 GB 0328003
(43) Date of publication of application: 16.08.2006
(73) Proprietor: Quill International Group Limited, Melbourne Derbyshire DE73 1DY (GB)
(72) Inventor: DORE, David J., Quill International Industries Plc, Melbourne, Derbyshire DE73 1DY (GB)
(74) Representative: Bray, Lilian Janet
(86) International application number: PCT/GB2004/004799
(87) International publication number: WO 2005/053978

(56) References cited:
- EP-A- 0 361 437
- DE-A- 10 134 223
- DE-A- 19 910 261
- US-A- 5 570 840
- US-B1- 6 449 975

## Description

The present invention relates to a mist-spraying apparatus primarily but not exclusively for use in an enclosed space.

US 5,570,840 describes a hand-held spraying apparatus that comprises an air atomized spray nozzle wherein a jet of air is used to break up a liquid to form a spray, the pressure of the air providing the energy required. The airflow to the spray nozzle is arranged to begin just prior to delivery of the liquid to the nozzle and ends just after cessation of the delivery of the liquid to prevent dripping, to ensure consistency of spray and to clean the nozzle following discharge. However, no air-blowing means independently operable from the spray nozzle is provided that will provide a circulation of the air and any atomized particles entrained therein around an enclosed space for a predetermined period of time.

DE 101 34 223 describes an air freshener wherein several olefactory devices controllable by an electronic controller are located between an air inlet and an air outlet of a ventilator of a vehicle passenger cabin. However, the controller does not independently control operation of the air supply means and the olefactory devices. Neither does the arrangement recirculate treated air around the cabin.

The aim of the invention is to provide a 'dry' mist which can sanitize exposed surfaces within an enclosed space without wetting them. The applications of such an apparatus are varied but the present invention has been designed primarily for use in the sanitization of exposed surfaces within an enclosed space that may be a storage area, a room or the like. For example, such a space may comprise the interior of goods and delivery vehicles, typically those which are used to transport items such as hospital laundry and the like. When such laundry is transported it is common for the same vehicle to be used to pick up dirty laundry at the same time as delivering clean laundry. In such circumstances, the opportunity for cross-contamination to occur is great. Even when dirty laundry is not housed within the same vehicle interior as clean laundry, the same vehicle is often used to transport both at separate times so that it is still advantageous for a means to be provided that can sanitize the interior of the vehicle between trips.

Similar requirements exist in other fields. For example, operating theatres are in constant use and whilst new sterile packs of instruments and linen are used for each patient, the surfaces within the theatre itself are not normally sanitized between operations. As many operations cause spillage of blood and other body fluids, the sanitization of exposed surfaces within the theatre between operations would be highly desirable. Commercial glasshouses and battery hen-houses and the like also need to be sanitized regularly and mist-spraying apparatus is often used to spray biocides of various kinds within these structures.

In all of these applications it is a desirable requirement that the mist being sprayed reaches all parts of the enclosed space so that every exposed surface within the space can be treated.

It is therefore an object of the present invention to provide a mist spraying apparatus that can be used for sanitizing an enclosed space and that will substantially fulfill the aforesaid requirement.

According to the present invention there is provided a mist spraying apparatus primarily but not exclusively for use in an enclosed space in accordance with Claim 1.

Hence, in the present invention the air-blowing means is used to create an airstream in the space which immediately entrains the atomized particles being emitted by the atomizing nozzle. As a result the particles are rapidly diluted but also evenly distributed into the airstream and are thus applied evenly over all exposed surfaces within the space being sprayed. Circulation of the air before the atomizing nozzle's operation ensures that the particles emitted by the nozzle are always entrained as atomized particles and do not clump together to form droplets, which are wetting and tend to fall uselessly to the floor of the space. Likewise, recirculation of the air after operation of the nozzle has ceased ensures that all surfaces within the space are reached by the airstream. It will be appreciated that the length of time that the nozzle operates and that the air is recirculated after nozzle operation has ceased will depend on the nature and concentration of the liquid being sprayed, the size of the enclosed space and the particular application of the apparatus and can be varied as required.

Preferably, the atomizing nozzle is located centrally within the outlet conduit.

Preferably also, the outlet conduit has a rectangular cross-sectional profile.

Preferably also, the outlet conduit defines a slot so that the airstream emitted into the space is in the form of a slot-jet.

Preferably also, the atomizing nozzle is inset within the outlet conduit.

Preferably also, the spraying tip of the nozzle is inset by at least 25 mm and by no more than 40 mm into the outlet conduit.

Preferably also, the air-blowing means is provided with a source of steam whereby steam is additionally blown into the enclosed space through the outlet conduit.

Preferably also, the atomizing nozzle comprises a 60° solid cone nozzle.

Preferably also, the spraying means is adapted is adapted to spray at least 11 litre of liquid per hour at a pressure of 7 x 10⁵ N per m² (7 bar).

Preferably also, the air-blowing means comprises a cylindrical fan.

Preferably also, the apparatus is located in proximity to the ceiling at the top of a wall of the enclosed space.

The present invention will now be described by way of example with reference to the accompanying drawings, in which:-
Fig. 1 is a schematic diagram of a mist-spraying apparatus according to the present invention; and
Fig. 2 is a perspective view of the exterior of apparatus as shown in Fig. 1 when mounted within the storage area of a delivery vehicle.

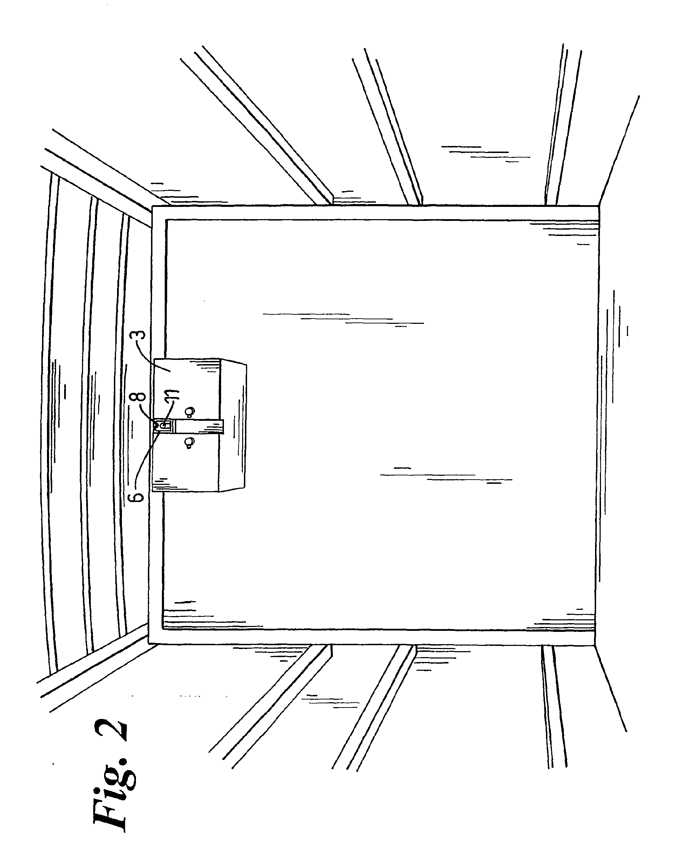

A mist-spraying apparatus in accordance with the invention comprises an air-blowing means 1 and a spraying means 2. Preferably, as shown in Fig. 2 the apparatus is adapted to be located within a housing 3 that can be mounted at a suitable site within an enclosed area, as partially shown in Fig. 2 and as further described below, and connected to a power source. Apparatus that is intended to be used within a vehicle can be adapted to be powered by the vehicle itself by being linked to the vehicle's batteries. Alternatively, it can be provided with its own battery power supply which is adapted to be re-charged when the vehicle is in motion. Alternatively, apparatus for use in buildings and other permanent or semi-permanent structures can be powered from a mains electricity supply.

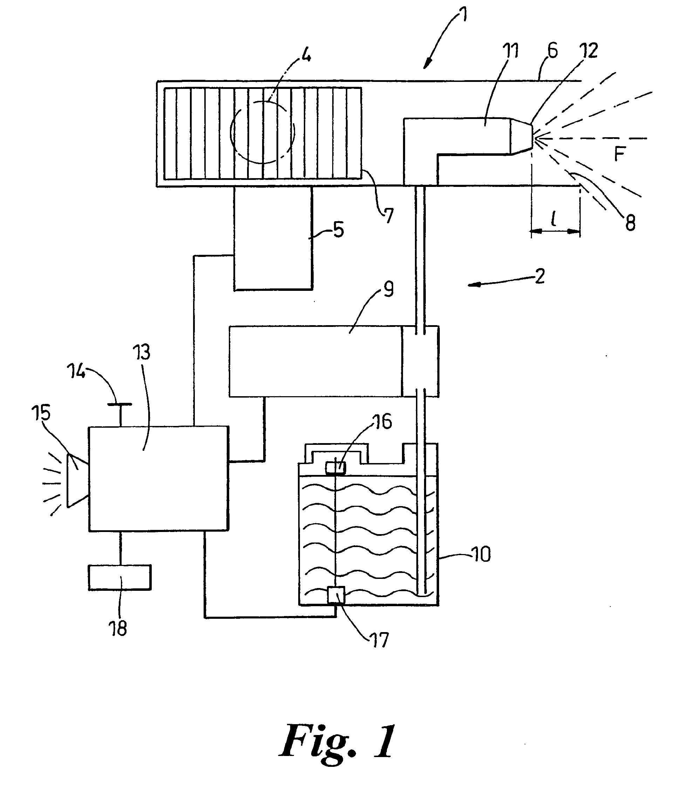

With particular reference to Fig. 1, the air blowing means 1 comprises a fan 4 powered by a motor 5 and defines an outlet conduit 6 through which air can be blown into the space and an inlet conduit 7 covered by a grille through which air from within the space can be drawn for blowing through the outlet conduit 6 to circulate within the space. The fan 4 is preferably a cylindrical fan but any suitable blowing means can be employed. For example, a cylindrical fan which is 130 mm across is capable of delivering an airflow of between 1.4 and 1.7 m³ per minute, which is suitable for use in an average-sized vehicle storage space with approximate dimensions of 12m by 3m by 3m (40' x 10' x 10').

The outlet conduit 6 is located at the front of the housing 3 and it has been found that an outlet conduit 6 with a rectangular cross-sectional profile provides an airflow pattern that is better at reaching all corners and exposed surfaces within spaces which are rectangular, parallelepipedal spaces than the airflow pattern provided by a circular outlet conduit. The outlet conduit 6 therefore defines a slot 8 so that the airstream emitted into the space is in the form of a slot-jet. The slot 8 preferably has dimensions of 85 mm by 70 mm when used to deliver an airflow as detailed above within the storage area of a delivery vehicle which is long and narrow, as shown in Fig. 2. In this case the slot 8 is orientated with its longer sides vertical but these sides can be disposed horizontally for enclosed spaces which are wider than they are high. Also, the apparatus is preferably located in proximity to the ceiling at the top of a wall of the enclosed space, as shown in Fig. 2. This enables the apparatus to mist-spray the space effectively.

The spraying means 2 comprises a pump 9 for delivering liquid from a reservoir 10 to an atomizing nozzle 11 for spraying the liquid into the space in the form of an atomized mist. The atomizing nozzle 11 is located within the outlet conduit 6 so that atomized particles emitted by the atomizing nozzle are entrained in the airstream emitted by the fan 4 and thereby distributed evenly throughout the space. In order to obtain the most efficient dispersal of the atomized particles within the airstream, the atomizing nozzle 11 is located centrally within the outlet conduit 6 and preferably its spraying tip 12 is inset therein. It has been found that the spraying tip 12 should be inset by a distance 1 at least 25 mm but no more than 40 mm into the outlet conduit 6 to ensure that the atomized particles emitted therefrom are all entrained in the most efficient manner in the airstream. Also, the atomizing nozzle 11 preferably comprises a 60° solid cone nozzle. Typically, such a spraying means should be capable of spraying at least 11 litres of liquid per hour at a pressure of 7 x 10⁵ N per m² (7 bar). Such a spraying rate is suitable for use in a vehicle storage space as detailed above.

A control means 13 is provided for controlling operation of the air-blowing means 1 and the spraying means 2 and is adapted to commence operation of the fan 4 prior to operation of the atomizing nozzle 11 and to continue operation of the fan 4 after operation of the nozzle 11 has ceased. This continues circulation of the air and any atomized particles entrained therein around the space for a predetermined period of time, which may be several minutes, dependent on the size of the enclosed space being treated.

This arrangement has two advantages. First, when an atomizing nozzle is operated, the pump 9 switches on and during an very short initial period the pressure of the liquid being discharged by the nozzle 11 rises to a predetermined substantially constant level. During the period of time wherein the pressure is rising, the nozzle 11 tends to discharge liquid particles that are not fully atomized. However, these particles can be broken up and entrained fully into the airstream flowing past the nozzle 11 if the airstream has been established prior to operation of the nozzle. Likewise, when the pump 9 is switched off, the nozzle 11 tends to discharge liquid particles but again these can be broken up and entrained within the airstream if the airstream is continued at a constant level for a predetermined time thereafter.

Second, continuing to recirculate the air along with entrained particles within the space for a predetermined period even after the nozzle 11 has ceased operation, ensures that all exposed surfaces within the space are reached by the airstream and can be acted upon by the sprayed liquid.

The control means 13 is provided with an emergency stop button 14, for use in the unfortunate event that the apparatus is remotely operated whilst a person is trapped within the space. To reduce the chances of such an occurrence, the control means 13 is preferably provided with an audible alarm 15 which sounds continuously during operation of the apparatus. In addition, the control means 13 can be linked to locks on the doors of the space to prevent them being opened whilst the apparatus is in use.

In order to ensure that the reservoir 10 is always adequately filled with liquid to be sprayed, a float 16 is provided within the reservoir 10 and used to trigger an alarm by making electrical contact with, for example, a block 17 located at the base of the reservoir 10 and linked to the control means. When the level of the liquid in the reservoir becomes low, a flashing light, for example, or other alarm means can be triggered by the control means 13 to warn operatives that the reservoir 10 should be topped up.

The control means 13 can also incorporate or be linked to a recording means 18 which records the time and duration of each operation of the apparatus so that checks can be run to ensure that operatives are using the apparatus appropriately and adequately.

It will be appreciated that the apparatus as described herein can be readily adapted for use in various applications. The liquid being sprayed can also vary as required. For example, when spraying soiled laundry, the liquid can comprise a sanitizing liquid including biocides and disinfectants. Alternatively, if used for mist-spraying in glasshouses, the liquid may comprise a pesticide, fungicide, and/or a foliar feed. Preferably, however, the liquid being sprayed comprises a mixture of an oil and aqueous solution. Such a solution produces a more finely atomized spray that an aqueous solution alone. Hence, an oil, for example in the form of a monopropylene glycol or monoethylene glycol, should be added to the liquid advantageously in a quantity of less than 1 part oil to every 100 parts aqueous solution by volume.

In a modification of the above apparatus for particular use in a hospital operating theatre or an enclosed space wherein it is desired not only to sanitize exposed surfaces but also to treat air-borne particles, the air-blowing means 1 can be supplied with steam from a suitable source so that steam is additionally blown into the enclosed space. Other gaseous substances could also be supplied to the apparatus for spraying into the enclosed space along with or in place of the steam as appropriate for any particular use of the apparatus.

## Claims

1. A mist-spraying apparatus for use in an enclosed space comprising
an air-blowing means (1) with an outlet conduit (6) through which air can be blown into the space and an inlet conduit (7) through which air from within the space can be drawn for blowing through the outlet conduit (6) to circulate within the space;
a spraying means (2) comprising a pump (9) for delivering liquid from a reservoir (10) to an atomizing nozzle (11) for spraying the liquid into the space in the form of an atomized mist; and
a control means (13) for controlling operation of the air-blowing means (1) and the spraying means (2) ;
**characterised in that**
the atomizing nozzle (11) is located within the outlet conduit (6) so that atomized particles emitted by the atomizing nozzle (11) are entrained in the airstream emitted by the air-blowing means and thereby distributed evenly throughout the space; and **in that**
the control means (13) is adapted to commence operation of the air-blowing means (1) prior to operation of the atomizing nozzle (11) and to continue operation of the air-blowing means (1) after operation of the nozzle (11) has ceased in order to continue circulation of the air and any atomized particles entrained therein around the space for a predetermined period of time.

2. An apparatus as claimed in Claim 1, wherein the atomizing nozzle (11) is located centrally within the outlet conduit (6).

3. An apparatus as claimed in Claim 1 or Claim 2, wherein the outlet conduit (6) has a rectangular cross-sectional profile.

4. An apparatus as claimed in any of Claims 1 to 3, wherein the outlet conduit (6) defines a slot (8) so that the airstream emitted into the space is in the form of a slot-jet.

5. An apparatus as claimed in any of Claims 1 to 4, wherein the atomizing nozzle (11) is inset within the outlet conduit (6).

6. An apparatus as claimed in any of Claims 1 to 6, wherein a spraying tip (12) of the nozzle (11) is inset by at least 25 mm and by no more than 40 mm into the outlet conduit.

7. An apparatus as claimed in any of Claims 1 to 6, wherein the air-blowing means (1) is provided with a source of steam whereby steam is additionally blown into the enclosed space via the outlet conduit (6).

8. An apparatus as claimed in any of Claims 1 to 7, wherein the atomizing nozzle (11) comprises a 60° solid cone nozzle.

9. An apparatus as claimed in any of Claims 1 to 8, wherein the spraying means (2) is adapted is adapted to spray at least 11 litres of liquid per hour at a pressure of 7 x 10⁵ N per m2 (7 bar).

10. An apparatus as claimed in any of Claims 1 to 9, wherein the air-blowing means (1) comprises a cylindrical fan (4).

11. An apparatus as claimed in any of Claims 1 to 10, which is located in proximity close to the ceiling at the top of a wall of the enclosed space.

12. A mist-spraying apparatus as claimed in any of Claims 1 to 11 wherein the reservoir (10) contains a mixture of an oil and an aqueous solution.

13. A mist-spraying apparatus as claimed in Claim 12, wherein the oil comprises monopropylene glycol or monoethylene glycol.

14. A mist-spraying apparatus as claimed in Claim 12 or Claim 13, wherein the mixture comprises less than 1 part oil to every 100 parts aqueous solution by volume.

## Patentansprüche

1. Nebelsprüheinrichtung zur Verwendung in einem abgeschlossenen Raum, welche enthält:
ein Luftblaseelement (1) mit einer Auslassleitung (6), über welche Luft in den Raum geblasen werden kann, und einer Einlassleitung (7), durch welche Luft von innerhalb des Raums zum Blasen durch die Auslassleitung (6) angesaugt werden kann, um innerhalb des Raumes zu zirkulieren;
ein Sprühelement (2), welches einen Pumpe (9) zum Überführen von einer Flüssigkeit von einem Behälter (10) an eine Zerstäubungsdüse (11) enthält, um die Flüssigkeit in der Form von einem zerstäubten Nebel in den Raum zu sprühen; und
ein Steuerelement (13) zum Steuern eines Betriebes des Luftblaseelements (1) und des Sprühelements (2);
**dadurch gekennzeichnet, dass**
die Zerstäubungsdüse (11) innerhalb der Auslassleitung (6) positioniert ist, so dass zerstäubte Partikel, welche durch die Zerstäubungsdüse (11) emittiert werden, in dem Luftstrom mitgerissen werden, welcher durch das Luftblaseelement emittiert wird, und **dadurch** über den Raum hinweg gleichförmig verteilt werden; und dass
das Steuerelement (13) dazu ausgelegt ist, einen Betrieb des Luftblaseelements (1) vor einem Betrieb der Zerstäubungsdüse (11) einzuleiten, und einen Betrieb des Luftblaseelements (1) fortzusetzen, nachdem ein Betrieb von der Düse (11) beendet ist, um eine Zirkulation von der Luft und von jeglichen darin mitgerissenen zerstäubten Partikeln für eine vorbestimmte Zeitperiode um den Raum fortzusetzen.

2. Einrichtung nach Anspruch 1, bei welcher die Zerstäubungsdüse (11) zentral innerhalb der Auslassleitung (6) positioniert ist.

3. Einrichtung nach Anspruch 1 oder 2, bei welcher die Auslassleitung (6) ein rechteckiges Querschnittsprofil hat.

4. Einrichtung nach einem der Ansprüche 1 bis 3, bei welcher die Auslassleitung (6) einen Schlitz (8) bestimmt, so dass der in den Raum emittiert Luftstrom in der Form von einem geschlitzten Strom ist.

5. Einrichtung nach einem der Ansprüche 1 bis 4, bei welcher die Zerstäubungsdüse (11) innerhalb der Auslassleitung (6) eingesetzt ist.

6. Einrichtung nach einem der Ansprüche 1 bis 6, bei welcher eine Sprühspitze (12) von der Düse (11) um zumindest 25 mm und um nicht mehr als 40 mm in die Auslassleitung eingesetzt ist.

7. Einrichtung nach einem der Ansprüche 1 bis 6, bei welcher das Luftblaseelement (1) mit einer Dampfquelle bereitgestellt ist, wobei ein Dampf zusätzlich über die Auslassleitung (6) in den abgeschlossenen Raum geblasen wird.

8. Einrichtung nach einem der Ansprüche 1 bis 7, bei welcher die Zerstäubungsdüse (11) eine 60°-Ganzkegel-Düse enthält.

9. Einrichtung nach einem der Ansprüche 1 bis 8, bei welcher das Sprühelement (2) dazu ausgelegt ist, zumindest 11 Liter der Flüssigkeit pro Stunde bei einem Druck von 7 x 105 N pro m2 (7 bar) zu versprühen.

10. Einrichtung nach einem der Ansprüche 1 bis 9, bei welcher das Luftblaseelement (1) einen zylindrischen Lüfter (4) enthält.

11. Einrichtung nach einem der Ansprüche 1 bis 10, welche in der Umgebung nahe der Decke an der Oberseite von einer Wand von dem abgeschlossenen Raum positioniert ist.

12. Nebelsprüheinrichtung nach einem der Ansprüche 1 bis 11, bei welcher der Behälter (10) eine Mischung aus einem Öl und einer wässrigen Lösung enthält.

13. Nebelsprüheinrichtung nach Anspruch 12, bei welcher das Öl ein Monopropylen-Glykol oder Monoethylen-Glykol enthält.

14. Nebelsprüheinrichtung nach Anspruch 12 oder 13, bei welcher die Mischung weniger als ein Anteil Öl auf 100 Anteile der wässrigen Lösung pro Volumeneinheit enthält.

## Revendications

1. Dispositif de pulvérisation de brouillard pour utiliser dans un espace fermé comprenant
des moyens de soufflage d'air (1) avec un conduit de sortie (6) à travers lequel l'air peut être soufflé dans l'espace et un conduit d'entrée (7) à travers lequel l'air venant de l'intérieur de l'espace peut être amené pour être soufflé à travers le conduit de sortie (6) pour circuler dans l'espace ;
des moyens de pulvérisation (2) comprenant une pompe (9) pour délivrer du liquide depuis un réservoir (10) vers une buse de pulvérisation (11) pour pulvériser le liquide dans l'espace sous la forme d'un brouillard pulvérisé ; et
des moyens de commande (13) pour commander le fonctionnement des moyens de soufflage d'air (1) et des moyens de pulvérisation (2) ;
**caractérisé en ce que**
la buse de pulvérisation (11) est située dans le conduit de sortie (6) de telle manière que des particules pulvérisées émises par la buse de pulvérisation (11) sont entraînées dans le flux d'air émis par les moyens de soufflage d'air et distribuées ainsi également dans tout l'espace ; et **en ce que**
les moyens de commande (13) sont adaptés pour commencer le fonctionnement des moyens de soufflage d'air (1) avant le fonctionnement de la buse de pulvérisation (11) et pour continuer le fonctionnement des moyens de soufflage d'air (1) après que le fonctionnement de la buse (11) a cessé afin de continuer la circulation de l'air et de toutes les particules pulvérisées entraînées dedans dans l'espace pendant une période de temps prédéterminée.

2. Dispositif selon la revendication 1, dans lequel la buse de pulvérisation (11) est située centralement dans le conduit de sortie (6).

3. Dispositif selon la revendication 1 ou 2, dans lequel le conduit de sortie (6) a un profil en section transversale rectangulaire.

4. Dispositif selon l'une quelconque des revendications 1 à 3, dans lequel le conduit de sortie (6) définit une fente (8) de telle manière que le flux d'air émis dans l'espace est sous la forme d'un jet en fente.

5. Dispositif selon l'une quelconque des revendications 1 à 4, dans lequel la buse de pulvérisation (11) est insérée dans le conduit de sortie (6).

6. Dispositif selon l'une quelconque des revendications 1 à 5, dans lequel une pointe de pulvérisation (12) de la buse (11) est insérée d'au moins 25 mm et de pas plus de 40 mm dans le conduit de sortie.

7. Dispositif selon l'une quelconque des revendications 1 à 6, dans lequel les moyens de soufflage d'air (1) sont pourvus d'une source de vapeur moyennant quoi de la vapeur est soufflée additionnellement dans l'espace fermé via le conduit de sortie (6).

8. Dispositif selon l'une quelconque des revendications 1 à 7, dans lequel la buse de pulvérisation (11) comprend une buse en cône plein à 60°.

9. Dispositif selon l'une quelconque des revendications 1 à 8, dans lequel les moyens de pulvérisation (2) sont adaptés pour pulvériser au moins 11 litres de liquide par heure à une pression de 7 x 10⁵ N par m² (7 bars).

10. Dispositif selon l'une quelconque des revendications 1 à 9, dans lequel les moyens de soufflage d'air (1) comprennent un ventilateur cylindrique (4).

11. Dispositif selon l'une quelconque des revendications 1 à 10, qui est situé très à proximité du plafond en haut d'une paroi de l'espace fermé.

12. Dispositif de pulvérisation de brouillard selon l'une quelconque des revendications 1 à 11, dans lequel le réservoir (10) contient un mélange d'une huile et d'une solution aqueuse.

13. Dispositif selon la revendication 12, dans lequel l'huile comprend du glycol de monopropylène ou du glycol de monoéthylène.

14. Dispositif de pulvérisation brouillard selon la revendication 12 ou 13, dans lequel le mélange comprend moins qu'une partie d'huile pour chaque 100 parties de solution aqueuse par volume.
